# EUROPEAN PATENT SPECIFICATION

(11) **EP 3 740 373 B1**
(45) Date of publication and mention of the grant of the patent: **29.06.2022**
(21) Application number: 18900595.2
(22) Date of filing: 18.01.2018
(51) Int. Cl.: B29C 64/118, B29C 70/16, B29C 70/38, B29C 64/209, B29C 64/295, B33Y 10/00, B33Y 30/00, B33Y 70/00

(54) **FIBER-REINFORCED 3D PRINTING**
FASERVERSTÄRKTES 3D-DRUCKEN
IMPRESSION 3D RENFORCÉE PAR DES FIBRES

(43) Date of publication of application: 25.11.2020
(73) Proprietor: Arctic Biomaterials Oy, 33520 Tampere (FI)
(72) Inventor: HUTTUNEN, Mikko, 33520 Tampere (FI); PIHLAJAMÄKI, Janne, 60320 Seinäjoki (FI)
(74) Representative: Kolster Oy Ab
(86) International application number: PCT/FI2018/050037
(87) International publication number: WO 2019/141892

(56) References cited:
- EP-A1- 3 150 361
- WO-A1-2015/188017
- CN-U- 206 048 811
- US-A1- 2014 361 460
- US-A1- 2017 341 300

## Description

### FIELD OF THE INVENTION

The present invention relates to additive manufacturing of a part, and more particularly to a method and three-dimensional printer for additive manufacturing of a fiber-reinforced part.

### BACKGROUND

The following background description art may include insights, discoveries, understandings or disclosures, or associations together with disclosures not known to the relevant art prior to the present invention but provided by the present disclosure. Some such contributions disclosed herein may be specifically pointed out below, whereas other such contributions encompassed by the present disclosure the invention will be apparent from their context.

Automatic fiber placement (AFP) refers to a process for additive manufacturing of composite structures, in which continuous fibers are aligned on predetermined paths layer by layer to form the structure. Automated fiber placement with thermoplastic composites in known in the art. AFP technique is used both with thermosetting and thermoplastic polymers with continuous reinforcing fibers (carbon, glass, etc.). In AFP, the thermoplastic polymer raw material is in the form of an impregnated, premanufactured, and solidified fiber tow. The fiber tow is fed through a printing head in which the fiber tow is heated above the melting temperature of the matrix polymer (i.e. the thermoplastic polymer). The printing head is connected to a robot which is arranged to accomplish printing of the fiber on predetermined three dimensional (X-Y-Z) paths, and thus a desired structure of the final part is formed.

Fused filament fabrication (FFF) is a three dimensional (3D) printing technique where a continuous filament of a thermoplastic material is used. Mechanical properties of 3D printed objects manufactured by using the fused filament fabrication technique are limited due to the fact that these objects typically are composed of polymer only. This limitation may be mitigated by adding chopped (short) fiber reinforcements to the polymer to print filaments, but this does not remarkably improve the mechanical properties of the 3D printed objects.

Continuous fiber reinforcement may be used in plastic composites to provide high strength. However, so far commercial experience on using continuous fiber reinforcement in fused filament fabrication is very limited.

US 5936861 A discloses a technique for fused filament fabrication (FFF) of continuous fiber reinforcement by single nozzle extrusion using pre-impregnated continuous fiber-reinforced raw material, where reinforcing fibers are impregnated during a printing process on external impregnation bath linked to a printing device. The fiber reinforcement is impregnated during 3D printing in an external impregnation device located before the printing device. Alternatively, a co-milled fiber tow is used, where the matrix and the reinforcing fibers are both in a fiber form in a same fiber tow which is fed through a 3D printing nozzle where the matrix fibers melt and impregnate the fibers.

A publication "Three-dimensional printing of continuous-fiber composites by in-nozzle impregnation" by Ryosuke Matsuzaki et al. (Scientific Reports 6, Article number: 23058 (2016), doi:10.1038/srep23058, Published online 11 March 2016 (http://www.nature.com/articles/srep23058)) discloses a device us-ing impregnation nozzle, wherein fibers are impregnated by thermoplastic polymer during the printing process in the specially designed impregnation nozzle.

US 14491439 and US 9327453 B2 disclose using a dual extruder to print polymer matrix and continuous fiber reinforcement. They disclose using FFF, where 3D printing of continuous fibers is performed using the preimpregnated, premanufatured and solidified fiber filament which is impregnated by thermo-plastic polymer and which is heated in the fiber printing nozzle. A 3D printer also includes another printing nozzle which is used solely to print matrix material. The fiber printing nozzle applies flattening/ironing force to the in-nozzle melted fiber reinforcement filament. The flattening/ironing force equals to a consolidation force in automatic fiber placement technique. US 2014/361460 A1 discloses a three-dimensional printer for additive manufacturing that comprises a heatable nozzle.

Both the FFF method to print continuous fibers, and the AFP method, are used to create 3D structures layer by layer by applying continuous fiber reinforcements to form final structures. In FFF and AFP, the continuous fibers embedded in the thermoplastic or thermoset polymer matrix are extruded through a print head to form continuous fiber reinforced 3D structures. AFP and FFF of continuous fibers differ in the size and form of printed objects. In AFP typically very large objects are created and AFP is typically used, but not limiting to, to form hollow structures. FFF of continuous fibers may, on the other hand, be used to create smaller objects of any shape.

In both the FFF of continuous fibers and the AFP technique of thermo-plastic polymers, the raw material is in form of an impregnated, premanufactured and solidified fiber reinforced tow. In both the FFF of continuous fibers and the AFP technique of thermoplastic polymers, the raw material tow is fed through the print head in which the tow is heated above the melting temperature of the matrix polymer, after which the fibers are laid onto the print surface layer by layer. In both the FFF of continuous fibers and the AFP technique of thermoplastic polymers, the melted fiber is subjected to a compaction force (i.e. consolidation force and/or flattening/ironing force) which attaches the fibers to the part being manufactured. In AFP, the compaction/consolidation force is applied by a consolidation roller, and in FFF of continuous fibers, the compaction/consolidation force is applied by the outer geometry of a heated fiber printing nozzle (ironing lip). In AFP technique this force is referred to as compaction/consolidation force, and in FFF of continuous fibers this force is referred to as flattening/ironing force. FFF and AFP may be used to extrude continuous fibers embedded in thermoplastic or thermoset polymers and to create objects from such materials by means of additive manufacturing, i.e. 3D printing. A difference between the existing 3D printing techniques and automatic fiber placement technique to print continuous fiber is in the size and the form of the printed objects.

In FFF and AFP, the compaction of the fiber to the printed part occurs by melt bonding of polymer surfaces. Melt bonding involves three stages: intimate contact, molecular diffusion (reptation or autohesion), and consolidation. The intimate contact stage involves bringing two surfaces together under heat and pressure such that the polymer matrix of each surface is in direct contact with each other. Once intimate contact is achieved, the polymer chains diffuse between the two layers (surfaces) via thermal vibrations, and entangle to form a bond. Finally the bond zone is cooled under pressure and a cohesive bond is achieved.

Other techniques include a device using an impregnation nozzle where fibers are impregnated by thermosetting photocurable polymer during the printing process in a specially designed impregnation nozzle, or stacking the fiber layers on top of each other.

Despite of the methods described above, there is a need to provide a more advanced technique for 3D printing of continuous fiber reinforcement.

### SUMMARY

The following presents a simplified summary of features disclosed herein to provide a basic understanding of some exemplary aspects of the invention. This summary is not an extensive overview of the invention. It is not intended to identify key/critical elements of the invention or to delineate the scope of the invention. Its sole purpose is to present some concepts disclosed herein in a simplified form as a prelude to a more detailed description.

According to an aspect, there is provided the subject matter of the independent claims. Embodiments are defined in the dependent claims.

One or more examples of implementations are set forth in more detail in the accompanying drawings and the description below. Other features will be apparent from the description and drawings, and from the claims.

### BRIEF DESCRIPTION OF THE DRAWINGS

In the following the invention will be described in greater detail by means of preferred embodiments with reference to the attached drawings, in which
Figure 1 is a schematic diagram illustrating a 3D printer according to an exemplary embodiment;
Figure 2 is a schematic diagram illustrating a prior art 3D printing unit;
Figure 3 is a schematic diagram illustrating a 3D printing unit according to an exemplary embodiment;
Figure 4 is a flow diagram illustrating a 3D printing process according to an exemplary embodiment;
Figure 5 is a schematic diagram illustrating a fiber printing unit according to an exemplary embodiment;
Figure 6A is a schematic diagram illustrating a 3D printed parts according to an exemplary embodiment;
Figure 6B is a schematic diagram illustrating a 3D printed part according to an exemplary embodiment;
Figure 7A and 7B are schematic diagrams illustrating a 3D printed structure according to an exemplary embodiment;
Figure 8A, 8B, 8C and 8D are schematic diagrams illustrating exemplary structures of a print head.

### DETAILED DESCRIPTION OF THE INVENTION

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising", "containing" and "including" should be understood as not limiting the described embodiments to consist of only those features that have been mentioned and such embodiments may contain also features/structures that have not been specifically mentioned.

An embodiment discloses a structure of 3D printed objects composed of polymer and continuous/semi-continuous fiber reinforcements embedded in a polymer matrix, and a method for additive manufacturing of such a structure.

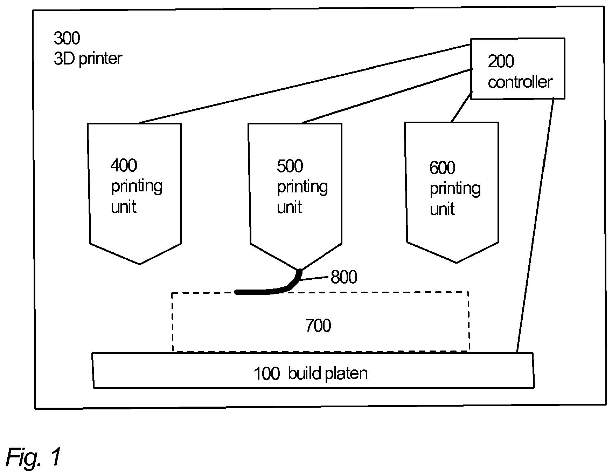

Figure 1 illustrates an exemplary 3D printer 300 including three separate 3D printing units (i.e. print heads): a first printing unit 400 to 3D print support material, a second printing unit 600 to 3D print polymer filament, and a third printing unit 500 to 3D print composite fiber reinforced filament 800. The first printing unit 400, the second printing unit 600, and the third printing unit 500 are able to move freely in X/Y/Z dimensions and in each of the possible 3D rotations around X/Y/Z axes (i.e. each print head 400, 500, 600 is controllable, programmable and able to operate in 3-dimensional space axes, and further optionally rotatable around 3 rotational axes). The number of printing units is, however, not limited to three. Instead, other embodiments may include two or more printing units to 3D print polymer, composite fiber filament, and/or support material(s), for example. The 3D printer 300 further comprises a movable or stationary build platen 100 for supporting the part 700 to be manufactured, and a controller 200 operatively connected to the first, second and third printing units 400, 500, 600.

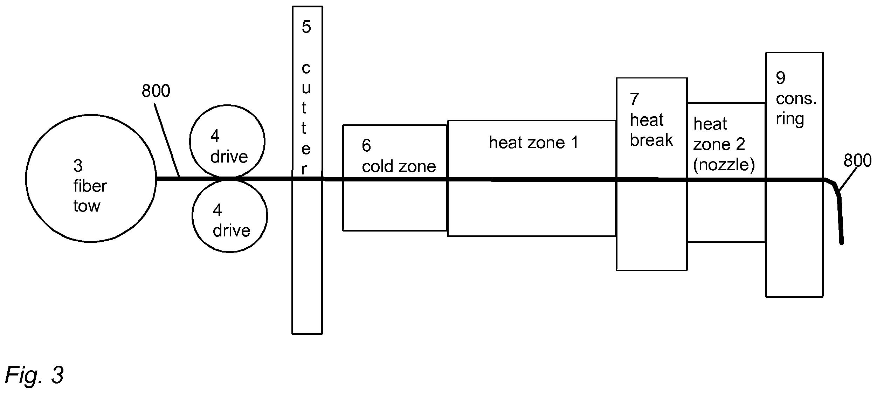

The structure and operation of an exemplary printing unit 500 to 3D print composite fiber reinforced filament 800 is described below in more detail e.g. in connection with Figures 3, 4, 5 and 8A-8C.

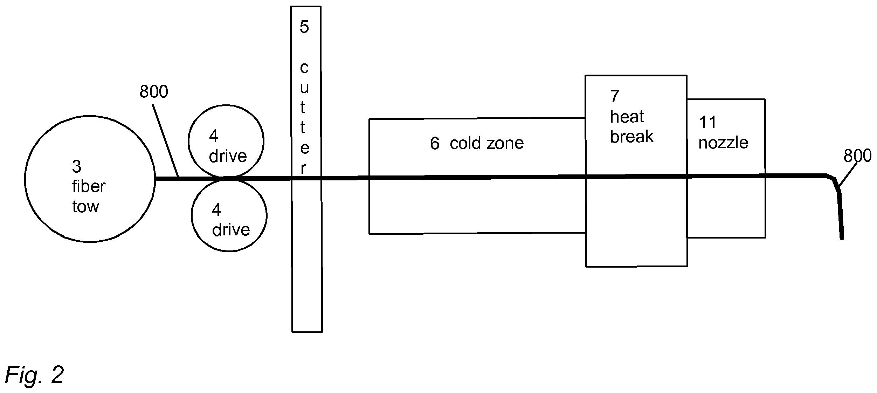

Figure 2 illustrates a prior art solution for 3D printing, comprising an extruder for 3D printing of continuous fiber reinforced composite filament pre-impregnated with thermoplastic resin. The fiber filament 800 may be in a form of a fiber tow 3, and a filament drive 4 is arranged to drive the fiber composite filament 800 through a cold feed zone 6 into a heated nozzle 11. In the solution of Figure 2, the heated nozzle 11 has a geometrical feature called an "ironing lip" to apply during 3D printing an "ironing force" (i.e. consolidation force) to the polymer matrix of the filament 800 being 3D printed. This "ironing force" applied by a small flat area located in the tip of the nozzle 11 is identical to the consolidation force applied in the AFP technique using a separate compaction roller. A cutter 5 cuts the fiber reinforced filament 800 to form separate components of the part. In the situation of Figure 2, the temperature between the fiber tow 3 and the nozzle 11 in the extruder is kept below Tm (Tm=the melting temperature of the polymer matrix), and the fiber reinforced composite filament 800 has a cross sectional area greater than 6.4×10⁻³ mm² and less than 1.3 mm².

An exemplary embodiment differs from the prior art solutions for 3D printing of fiber reinforced objects in that in an embodiment the fiber filament supply is implemented in a different way. An exemplary embodiment further differs from the prior art solutions for 3D printing of fiber reinforced objects in that in an embodiment the consolidation force is applied in a different way.

Figure 3 illustrates a 3D printing arrangement according to an exemplary embodiment. In Figure 3, the printing unit 500 to 3D print composite fiber reinforced filament 800 comprises an extruder for 3D printing of continuous fiber reinforced composite filament pre-impregnated with thermoplastic matrix material. The fiber filament 800 may be in a form of a fiber tow 3, and a filament drive 4 is arranged to drive the fiber composite filament 800 through a cold feed zone 6, a first heating zone 1 (heat zone 1), and a first heat break zone 7 (heat break 7) into a heated nozzle 2 (i.e. second heating zone 2, heat zone 2). The heated nozzle 2 is surrounded by a consolidation element 9 (which may be a consolidation ring 9) located after the heated nozzle 2. The consolidation ring 9 is arranged to gently apply (press) the filament 800 to the part 700. The consolidation ring 9 may or may not be heated.

The final attachment of the printed filament 800 and the underlying material occurs in the consolidation ring 9 which may be unheated and which may protrude lower (closer to the printed part 700) than the heated nozzle 2. After the compaction, solidification of the filament 800 occurs during a cooling phase which may include cooling of the part by means of an external cooling device (not shown in Figure 3).

A cutter 5 is arranged to cut the fiber reinforced filament 800 e.g. to form separate components of the part 700.

As shown in Figure 3, the first heating zone 1 is located before the heated nozzle 2, wherein the pre-impregnated fiber composite filament 800 is pre-heated in the first heating zone 1, and thus the temperature of the extruder is not kept below Tm (Tm=the melting temperature of the thermoplastic matrix material) between the fiber tow 3 and the heated nozzle 2 (instead the temperature in the first heating zone 1 before the heated nozzle 2 is above Tm).

The first heating zone 1 (heat zone 1) is a pre-heating zone where the temperature T ≥ Tm (Tm=the melting temperature of the polymer matrix). The first heating zone 1 is located before the heated nozzle 2 (heat zone 2), and the first heat break zone 7 is between the first heating zone 1 and the heated nozzle 2. The heated nozzle 2 and the first heating zone 1 may have separate heaters (not shown in Figure 3). For example, the temperature in the heated nozzle 2 may be higher than the temperature in the first heating zone 1, or vice versa. The first heating zone 1 which pre-heats the material (i.e. the polymer matrix) before it reaches the heated nozzle 2 may speed up the 3D printing process because the material is pre-heated before entering the heated nozzle 2 (heat zone 2). Thus the printing process speed may be increased.

The heat zone 1 (pre-heating zone) may further improve the compaction of fiber filament layers while also increasing the process speed. Improvement of the compaction is a consequence of the fact that the fiber filaments are heated for a longer period of time and/or over a longer dimensional area. The compaction is improved by ensuring better pre-heating of the matrix polymer surrounding the fibers 800 in the heated zone 1 (pre-heating) prior the heated nozzle 2.

The consolidation ring 9 may be arranged to surround the heated nozzle 2. The consolidation ring 9 compacts the fiber filament 800 to the part 700 being 3D printed. The consolidation ring (or compaction ring) 9 may be a separate entity attached to the heated nozzle 2. The interspace between the part 700 and the heated nozzle 2 may be larger than the interspace between the consolidation ring 9 and the part 700. The consolidation ring 9 may be formed of insulating material (such as ceramic), and the consolidation ring 9 may be non-heated. Alternatively, the consolidation ring 9 may be formed of metal, and the consolidation ring 9 may be heated by a (separate) heater (not shown in Figure 3).

The consolidation ring 9 may be arranged to function as a welding head to ultrasonically weld the pre-heated (or even non-heated or cooled) fiber filament 800 to the part 700.

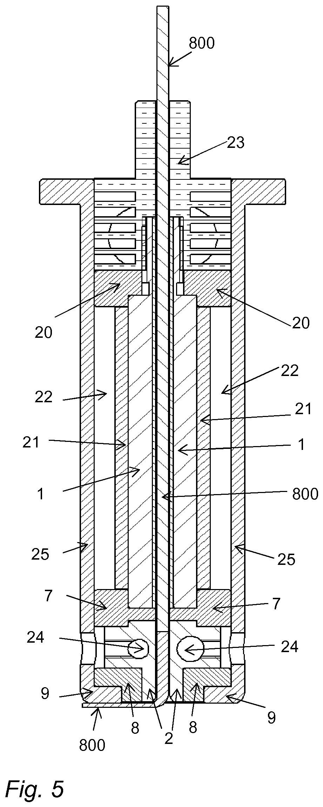

A further heat break 8 may be located between the heat zone 2 (i.e. heated nozzle 2) and the consolidation ring 9 (see Figure 5).

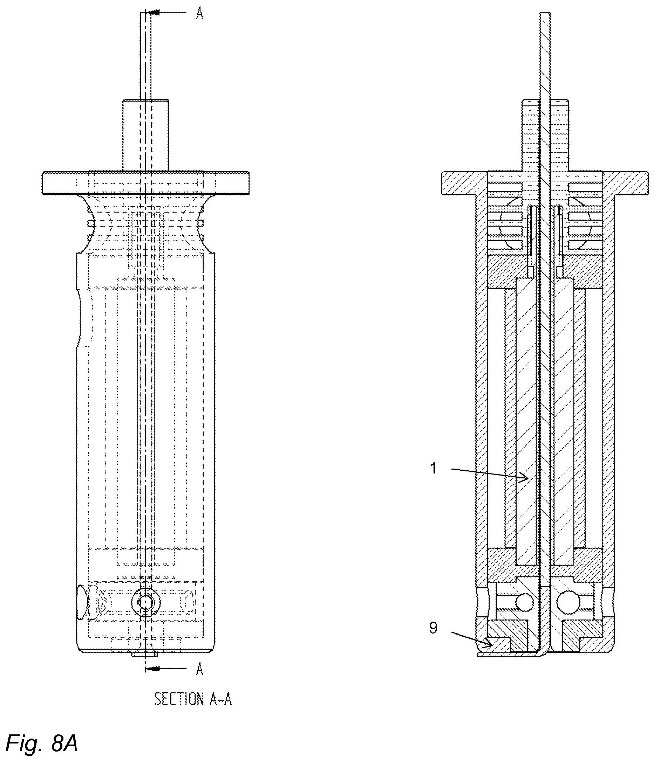

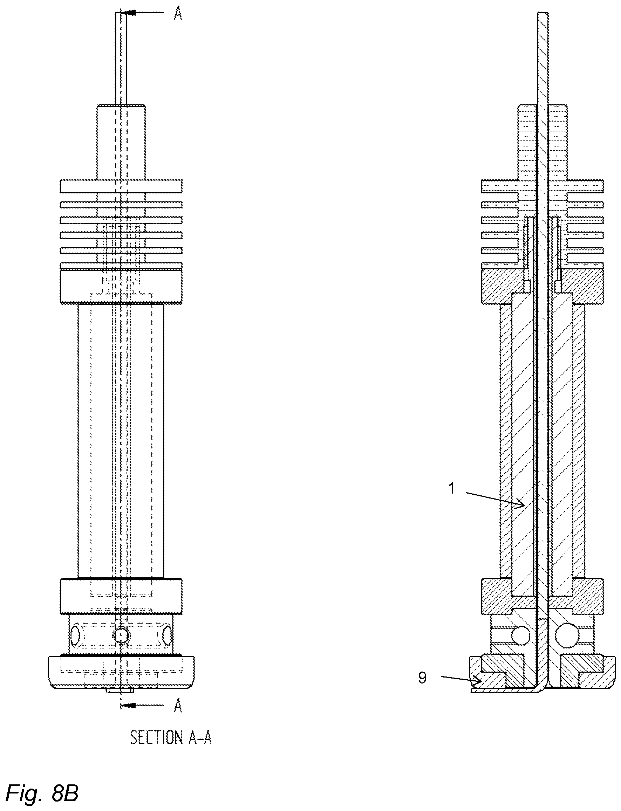

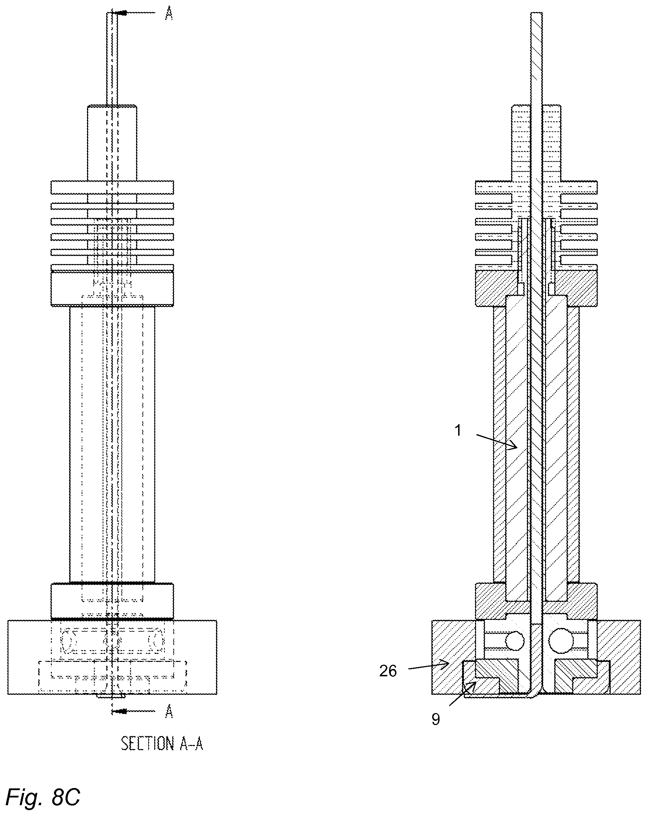

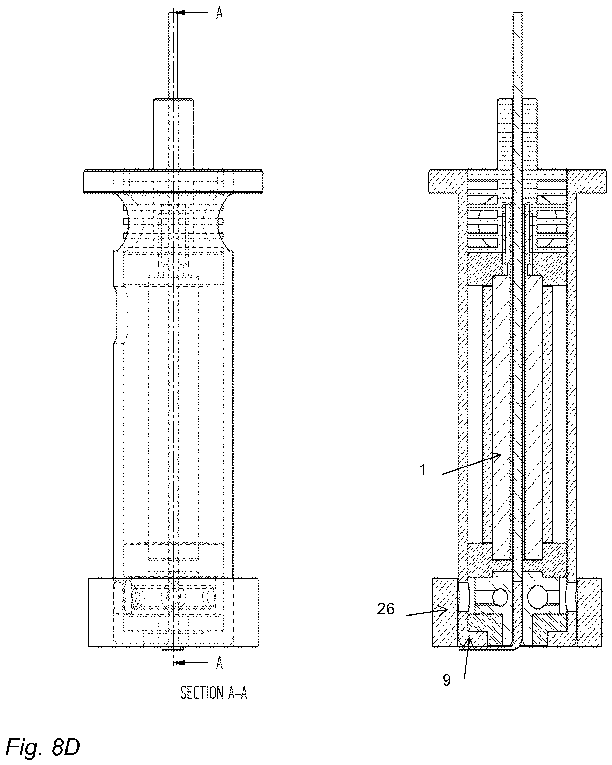

Figure 5 further illustrates a nozzle system/nozzle arrangement/nozzle unit 500 (i.e. printing unit 500) according to an embodiment in more detail. The 3D printing unit 500 shown in Figure 5 is configured to accomplish the filament feeding, filament melting, passing of the filament 800 through the heated nozzle 2, and filament compaction in the compaction element (which may be a compaction ring or consolidation ring 9), in accordance with an embodiment. The compaction ring 9 may be a geometrical part of a cover structure/housing 25 of the printing unit 500. The compaction ring may thus be a separate part connected to the cover structure/housing 25 or to any appropriate section/part (see Figures 8A, 8B, 8C, 8D). The 3D printing unit shown in Figure 5 includes the consolidation ring 9 and the pre-heating zone (i.e. heat zone 1). The printing unit 500 may further include insulators 7, 8, 20 (i.e. heat breaks 7, 8, 20 which may optionally be cooled e.g. by air or liquid), the heat zone 2 (heated nozzle 2), a thermoelement 21 for the pre-heating zone 1 (surrounding the heat zone 1), a thermoelement 24 for the heated nozzle 2, an air gap 22, and a heat sink 23 cooled e.g. by air or liquid. The insulator 7 corresponds to the heat break 7 located between the pre-heating zone (i.e. heat zone 1) and the heat zone 2 (i.e. heated nozzle 2). The insulator 8 may be located between the heat zone 2 (i.e. heated nozzle 2) and the consolidation ring 9. The insulator 20 is located at the cold feed zone 6 before the pre-heating zone (i.e. heat zone 1).

An embodiment enables 3D printing of a layered structure such that the fiber layer may have the same or a different thickness compared to that of the polymer layer. The thickness of a single fiber layer may equal to one or more polymer layers. Preferably, a single fiber layer equals to several polymer layers. The fiber 800 may be printed to grooves formed by the polymer layer/several polymer layers.

In an embodiment, a thick fiber composite filament (diameter ≥ 0.9 mm) is used, and several polymer layers may be applied on top of/below/around one fiber composite filament layer. More than 2 printing units/nozzles may be used (at least one of which is the printing unit 500 to 3D print composite fiber reinforced filament 800, i.e. the 3D printing arrangement of Figure 3). The diameter of the thick fiber composite filament may be 0.9 mm or above.

In an embodiment, a thin fiber composite filament may be used. The diameter of the thin fiber composite filament may be 0.1 mm - 0.9 mm. The diameter of the thin fiber composite filament may be the same or higher than that of the polymer layer. In the latter case, several polymer layers may be applied on top of/below/around one fiber composite filament layer.

In an embodiment, the fiber reinforced composite filament is pre-impregnated with thermoplastic matrix material. The matrix material of the composite fiber filament (and also the polymer filament 3D printed by the printing unit 600) are thermoplastic; thus no photo curing is required.

In an embodiment, the pre-impregnated fiber reinforced composite filament 800 is heated in the first heating zone 1 where the temperature is set above the melting temperature of the matrix material, before the fiber reinforced composite filament enters the heated nozzle 2. Thus an additional heating zone 1 is located before the heated nozzle 2. This additional heating zone 1 enables speeding up the 3D printing process as the material is heated before it enters the heated nozzle 2. The pre-heating in the additional heating zone 1 also enables improving the consolidation of the printed fiber filament to previously printed material layers of the part as the fiber filament heating is improved. This may be beneficial particularly when higher printing speeds are used. The temperature in the additional heating zone 1 is above the melting temperature of the matrix polymer material.

In an exemplary method, the fiber reinforced composite filament feed rate may be adjusted. The fiber reinforced composite filament feed rate need not be linear and/or constant. The feed zone of the fiber reinforced composite filament is not kept entirely below the melting temperature of the thermoplastic matrix material, because the heating zone 1 where matrix material is pre-heated, is located in the feed zone of the fiber reinforced composite filament 800. The feed zone of the fiber reinforced composite filament 800 is not entirely cold. The first heat break zone 7 between the heating zone 1 and heating zone 2, is non-heated, and the temperature in the first heat break zone 7 may be lower than the temperature in the heating zone 1 and heating zone 2. The purpose of the heat break zone 7 is to create a temperature gap between the heating zone 1 and the heated nozzle 2. The heat break zone 7/the temperature gap produced by it enables the control of the temperatures of the heating zone 1 and the heated nozzle 2 independently.

In an embodiment, the printing unit 400 for the support material (see Figure 1) is arranged to 3D print the support material which is to be removed from the final 3D printed part. The printing unit 600 for the polymer is arranged to 3D print the perimeters (surfaces), fine details, and/or thin polymer infill structures of the 3D printed part. The printing unit 500 for the composite fiber filament is arranged to 3D print the continuous fiber reinforcement having a relatively high layer thickness (typically higher than that of the polymer) and wide line width (typically wider than that of the polymer, but it may also be the same or thinner compared to polymer line width). The continuous fiber reinforcement is a composite fiber filament comprising a fiber filament pre-impregnated with thermoplastic matrix material. The nozzle(s) of the printing unit(s) 400, 500, 600 may be rounded.

The heated nozzle 2 is surrounded by the compaction ring 9 which may be non-heated and manufactured of insulator material. Alternatively the compaction ring 9 may be heated, and manufactured of material efficiently conducting heat, such as metal. The gap between the heated nozzle 2 and the printbed (build platen 100) or previously printed material layers (part 700) may be greater than or equal to the gap between the printbed 100 or previously printed material layers 700 and the compaction ring 9.

In an embodiment, polymer wire used for the 3D printing of the polymer may be in the form of a continuous 0.1 mm - 5 mm diameter polymer filament, the inner diameter of the nozzle for the polymer may be relatively small (typically 0.1 mm - 3 mm), and the 3D printed line width of the polymer is fine (typically 0.1 mm - 5 mm). The raw material filament may, however, be of geometrical shape different from that of a round wire. Any cross sectional shape of the filament is possible.

In an embodiment, the continuous fiber reinforcement for the 3D printing is in the form of a relatively thick fiber composite filament having a thickness of 0.1 mm - 10 mm. Thus the inner diameter of the nozzle for the fiber composite filament is typically 0.1 mm - 20 mm, and the 3D printed line width of the fiber reinforcement is 0.2 mm - 40 mm. The raw material filament may, however, be of geometrical shape different from that of a round wire. Any cross sectional shape of the filament is possible.

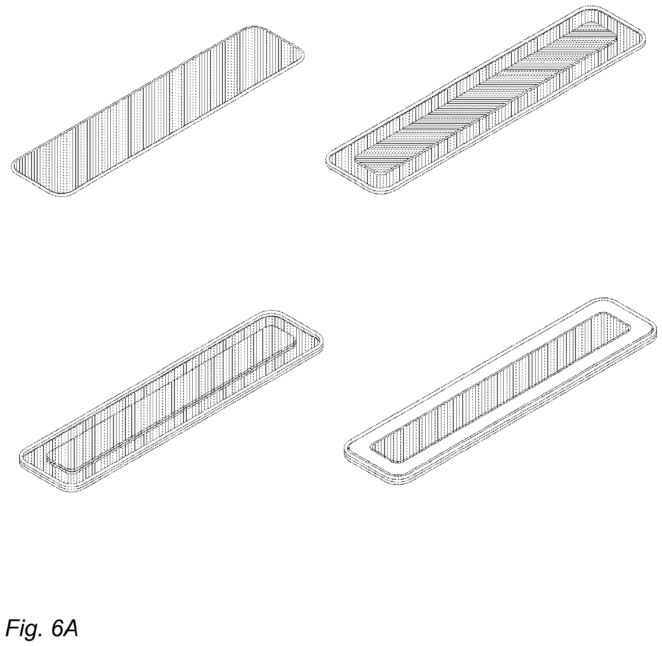

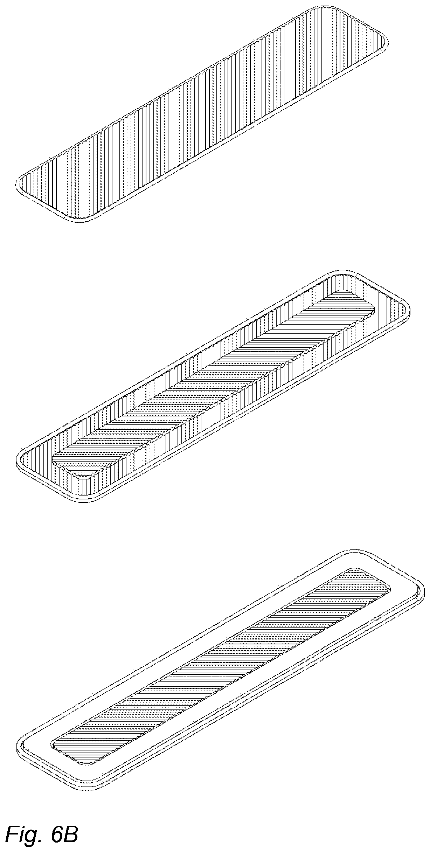

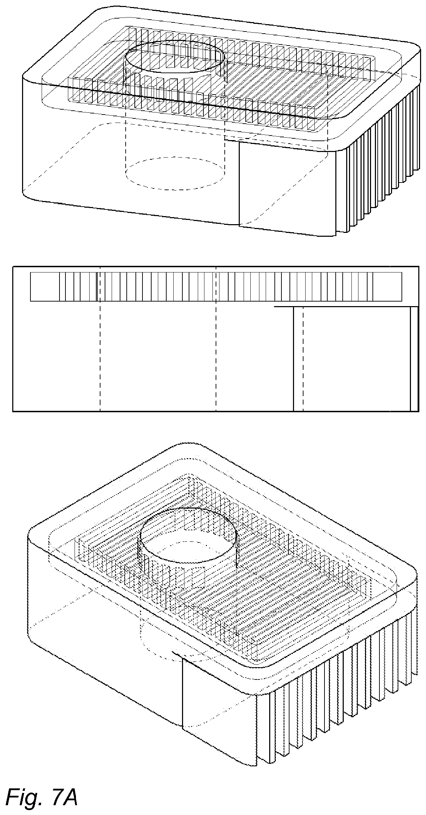

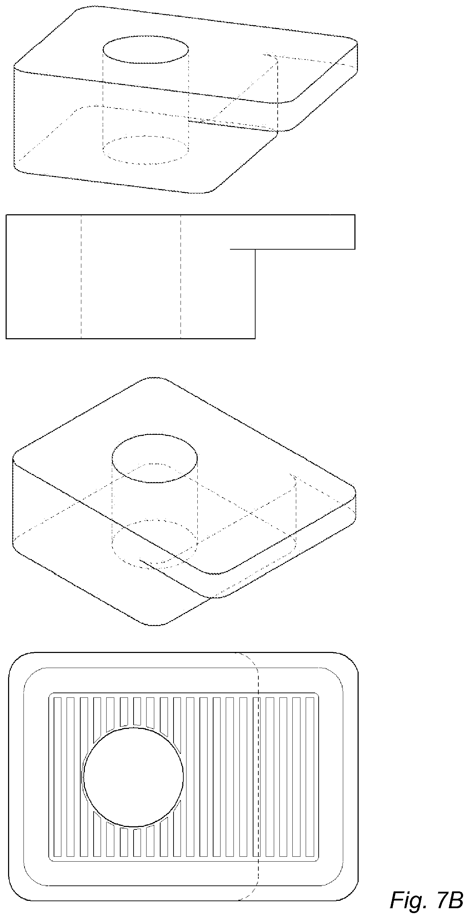

Figures 6A, 6B, 7A and 7B are simplified diagrams illustrating a 3D printed part according to an exemplary embodiment.

In an embodiment, the fiber reinforcement in the parts 3D printed by utilizing the heated nozzle 2 may have a higher layer thickness than the layer thickness of the polymer layers 3D printed by using the nozzle for the polymer. In the 3D printed object 700, there may be several thin polymer layers which are covered by a single composite fiber filament layer (see Figure 6A). The composite fiber filament layer(s) may also be embedded within the interior of the 3D printed parts (see Figure 6A). As the majority of the 3D printing time is typically consumed by filling the parts being 3D printed, the increase of the composite fiber filament layer thickness provided by the composite fiber filament layer(s) in the interior (or on top) of the 3D printed parts enables a remarkable decrease in the 3D printing time.

The line width of the 3D printed line is dependent on the diameter of the corresponding extruder nozzle, i.e. a smaller nozzle diameter enables 3D printing of a line having a finer line width, and a larger nozzle diameter enables 3D printing of a line having a thicker line width.

The printing units 400, 600, the nozzle for the polymer/the polymer filament supply, and the nozzle for the support material/the support material supply may be accomplished by utilizing existing techniques and systems. Therefore, they need not be discussed in more detail herein.

The final 3D printed part 700 may contain polymer sections, continuous fiber reinforcement sections, and additional infill and support structures.

In fiber filament printing, the nozzle refers to a device through which the fiber filament is ejected. In fiber filament printing, the velocity of the fiber filament ejected through the nozzle 2 may be identical to or slower or faster than that of the filament feed from the fiber tow 3, determined by the fiber drive 4. The nozzle 2 and/or the consolidation ring 9 do not restrict the cross-sectional area.

In an embodiment, the filament feed rate (determined by the fiber drive 4) from the fiber tow 3 may equal to the filament ejection rate through the nozzle 2 for a short period of time, and after that the fiber drive 4/fiber tow 3 may roll freely while the filament 800 is being ejected through the nozzle 2.

In an embodiment, the filament feed rate (determined by the fiber drive 4) from the fiber tow 3 may equal to the filament ejection rate through the nozzle 2 for a short period of time, and after that the fiber drive 4/fiber tow 3 may preload filament while the filament 800 is being ejected through the nozzle 2.

A filament refers to the cross-sectional area of a spooled build material, retaining the meaning from three-dimensional printing, and a strand may refer to individual fibers that are, for example, embedded in a matrix, together forming an entire composite filament.

During a 3D printing process, the continuous reinforced filament is applied onto a build platen 100 to build a layers 700 to form a three dimensional structure. The position and orientation of the build platen 100 and/or the position and orientation of each nozzle is controlled by one or more controllers 200 to deposit the continuous fiber reinforced filament in the desired location and direction. The direction and location of each of the 3D printed materials (support material, polymer, and fiber filament) may be controlled in X, Y and Z directions and all possible rotations around each of these directions. Position and orientation control mechanisms may include gantry systems, robotic arms, and/or H frames, equipped with position and/or displacement sensors to the controller(s) 200 to monitor the relative position or velocity of the nozzle relative to the build platen 100 and/or the layers 700 of the part being constructed. The controller(s) 200 may use sensed X, Y, and/or Z positions and/or displacement and/or rotations around one or more of X, Y and Z positions/axes, or velocity vectors to control the movements of the nozzles or platen 100.

The three dimensional printer 300 may include a cutter 5 controlled by the controller 200, to cut the continuous fiber reinforced filament 800 to form separate components on the structure. The cutter 5 may be a cutting blade, or a laser, for example.

The filament drive 4 feeds or pushes the unmelted filament 800 at a feed rate (which may or may not be variably controllable by the controller 200), after which the matrix material of the composite filament 800 may be heated as described in connection with Figure 3.

The composite filament 800 and thereby the matrix material is heated in the heated zone 1 where the temperature is set to be greater than a melting temperature of the matrix material and less than a melting temperature of the continuous fiber reinforcement.

The controller 200 controls the position and movement of the nozzle 2, the feed rate, print rate, cutter 5 and/or temperatures to accomplish the 3D printing.

When the part 700 is completed, the final part 700 may be removed from the build platen 100. Alternatively, an optional coating may be deposited on the part using a secondary print head to provide a protective coating and/or apply a figure or image to the final part.

The remaining space may either be left as a void or filled with separate material such as a polymer.

The heated zones 1, 2 are thermally conductive, e.g. made from copper, stainless steel, brass, or the like.

The nozzles may each have the same or different nozzle diameters.

An embodiment discloses an advanced 3D printer that is able to 3D print continuous fiber reinforcement. An advanced 3D printer and a method for additive manufacturing of a part are disclosed, which enable to 3D print continuous fiber reinforcement in alternative way if compared to existing 3D printers and methods.

An embodiment enables producing stronger 3D printed objects than those 3D printed by using conventional FFF printers. An embodiment also enables minimizing 3D printing time. In an embodiment the 3D printed objects are reinforced by fiber reinforcement. An embodiment enables the inclusion of continuous fiber reinforcement to objects to be 3D printed.

In an embodiment, the 3D printer 300 may include the printing unit(s) 500 to 3D print composite fiber reinforced filament 800 and the printing unit(s) 600 to 3D print polymer filament, but no printing unit 400 to 3D print support material.

In an embodiment, the 3D printer 300 may include the printing unit(s) 500 to 3D print composite fiber reinforced filament 800 and the printing unit(s) 400 to 3D print support material, but no printing unit 600 to 3D print polymer filament.

In an embodiment, the 3D printer 300 may include the printing unit(s) 500 to 3D print composite fiber reinforced filament 800, but no printing unit 400 to 3D print support material, and no printing unit 600 to 3D print polymer filament.

The composite fiber filament is formed of fiber reinforcement and thermoplastic matrix polymer which binds the filament bundles together. The fiber reinforcement may contain one or more yarns containing glass fiber(s), carbon fiber(s), aramid fiber(s), natural fiber(s) (such as kenaf, hemp etc.), thermoplastic polymer fiber(s) (such as polyamide, PLA, etc.), and/or hybrid fiber(s) (containing two or more different fibers in a single composite fiber filament). Each yarn may contain 1 to 1 000 000 individual fibers.

The matrix material used to bind fiber reinforcement(s) in the composite fiber filament may contain thermoplastic polymer, such as, but not limited to: PLA, PGA, PLGA, PLDLA, PCL, TMC, PA, PE, PEEK, PEKK, co-polymers of various monomers, and/or blends of various thermoplastic polymers/co-polymers.

The polymer filament may contain thermoplastic polymer, such as, but not limited to: PLA, PGA, PLGA, PLDLA, PCL, TMC, PA, PE, PEEK, PEKK, co-polymers of various monomers, and/or blends of various thermo-plastic polymers/co-polymers/additives.

The support material may contain any thermoplastic polymer that is soluble in a solvent different from that of the polymer(s) used in composite fiber filament and polymer filament. The solvent may include, but is not limited to, water, acetic acid, acetone, oil(s), etc. Alternatively the support material may contain any thermoplastic polymer, co-polymer and/or blend which may be mechanically disintegrated from the 3D printed part after the printing process. In that case, there are no restrictions or requirements on the solubility of the support material.

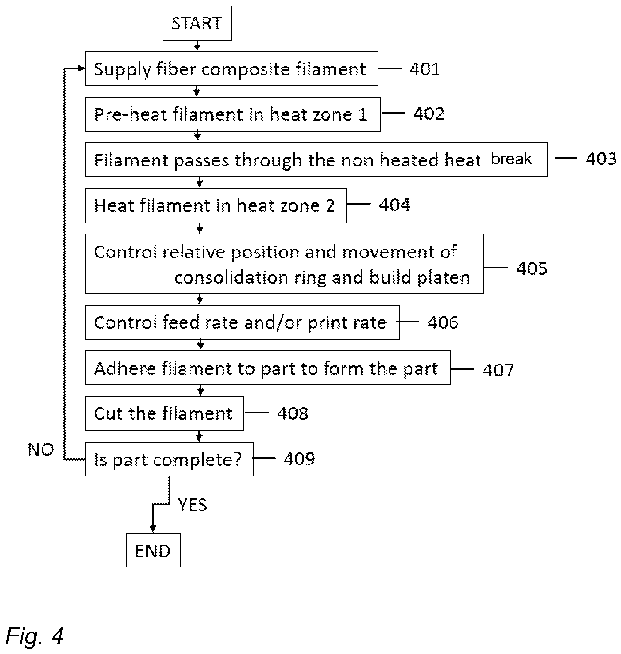

Figure 4 is a flow diagram illustrating an exemplary process for 3D printing of thermoplastic-pre-impregnated fiber composite filament 800. Referring to Figure 4, a method for additive manufacturing of a part 700, comprises supplying 401 the thermoplastic pre-impregnated fiber composite filament 800 including one or more inelastic axial fiber strands extending within thermoplastic matrix material of the filament 800. The part 700 to be manufactured is supported on a movable or stationary build platen 100. The pre-impregnated fiber composite filament 800 is heated 402 in a 3D printing unit 500 at a first heating zone 1 extending between the fiber composite filament supply 3 and a heated nozzle 2 of the 3D printing unit 500. The temperature of the first heating zone 1 is set above the melting temperature of the thermoplastic matrix material. The method further comprises heating 404 the pre-impregnated fiber composite filament 800 at the heated nozzle 2 to retain the temperature of the fiber composite filament 800, or to heat up the fiber composite filament 800 to a higher temperature. The temperature of the heated nozzle 2 is set above the melting temperature of the matrix material. The thermoplastic-pre-impregnated fiber composite filament is extruded from the heated nozzle 2 via a compaction ring 9, and the printing unit 500 and/or the compaction ring 9 and the build platen 100 are moved 405 relative to one another in three degrees of freedom, by a plurality of actuators (e.g. the printing unit 500 and the build platen 100 may be moved 405 relative to one another in three degrees of freedom). Alternatively the build platen 100 is stationary and the required movements to create the part 700 are only generated by moving the printing unit 500 and/or the compaction ring 9 in X, Y, and Z directions and possibly in all possible rotations around these axes. The compaction ring 9 applies a compaction force to the extruded fiber filament 800 and ensures that the fiber filament 800 attaches to previously printed fiber/polymer/support layers 700 firmly. The compaction ring 9 may be followed by an additional cooler unit which cools the printed fiber layer and improves its solidification. The fiber composite filament 800 including one or more inelastic axial fiber strands, is driven 406 through the first heating zone 1 into the heated nozzle 2, at a selected feed rate, wherein the feed rate and/or print rate may be controlled. The heating of the fiber composite filament 800 may be interrupted 403 at a non-heated heat break zone 7 between the first heating zone 1 and the heated nozzle 2. The temperature of the heat break zone 7 through which the fiber composite filament 800 travels during the printing process, is not controlled; the first heating zone 1 and the heated nozzle 2 are thermally separated (insulated) from each other by the heat break zone 7. To form the part 700, the filament 800 is adhered 407 to the part 700 (e.g. to the previously printed fiber, polymer or support layers) or the build platen 100. The filament 800 may be cut 408 by a cutter 5 e.g. when the part 700 is completed 409, when the supplied material is changed e.g. to polymer filament/support material, or when the design of the part 700 so requires.

In an embodiment, the solidification occurs during the cooling phase after the heated nozzle 2.

Figure 7A and 7B are schematic diagrams (perspective, side and top views) illustrating a 3D structure according to an exemplary embodiment.

In a printed structure (i.e. in the 3D printed part 700) according to an embodiment, the fiber reinforcement appears as a 0.1 mm - 10 mm thick filament. In an embodiment, the inner diameter of the heated nozzle 2 (i.e. the second heating zone 2) is typically 0.1 mm - 20 mm, and the printed line width is 0.2 mm - 40 mm.

A single fiber reinforcement (printed by using the fiber printing unit 500) may have a layer thickness higher than that of a single polymer layer (printed by using the polymer printing unit 600). Thus, in the part 700 printed by the method and 3D printer in accordance with an embodiment, there may be several polymer layers on the same height which only one fiber layer covers. The fiber layers may be embedded in the interior of the 3D printed part 700. As the majority of printing time is typically consumed by filling the part 700 being printed, the increase of layer thickness by the thick fiber layer(s) in the interior of the part remarkably decreases the printing time.

The part 700 may comprise four sections: polymer structure(s), continuous or semi-continuous fiber reinforcement, additional infill, and support material(s). To accomplish the 3D printing, a 3D model is loaded and printing parameters are set for the sections of the part. The 3D model is loaded and the parameters are set such that as a result of the printing, the polymer structures form/define the outer and inner shape of the part, the support material(s) form the support structure(s) for the part 700, the fiber reinforcement reinforces the part, and the additional infill fills empty spaces/areas in the fiber layer(s) (i.e. between the fiber filaments 800 printed) of the part 700, to complete the part. The printing parameters include e.g. the layer height of each layer.

Figures 8A, 8B, 8C and 8D are schematic diagrams illustrating exemplary structures of the print head including the consolidation element 9 and the first heating zone 1. A cross section via line A-A is shown.

In Figure 8A, the consolidation element is a fixed part of a print head cover structure. The print head structure shown in Figure 8A is similar to the structure shown in Figure 5.

In Figure 8B, the consolidation element is not a fixed part of the print head cover structure; instead the consolidation element is movable in relation to the print head cover structure.

In Figure 8C, the consolidation element is not a fixed part of the print head cover structure (instead the consolidation element is movable in relation to the print head cover structure), and after the consolidation element there is an additional member, e.g. a heating unit 26, a cooler ultrasonic welding head 26, etc.

In Figure 8D, the consolidation element is a fixed part of the print head cover structure, and after the consolidation element there is an additional member, e.g. a heating unit 26, a cooler ultrasonic welding head 26, etc.

Otherwise, the print head structures shown in Figure 8B, 8C and 8D are largely similar to the print head structure shown in Figure 5.

### Example 1

A G-code for fiber printing and polymer printing was created using custom made software from a 3D design of the object to be 3D printed. According to the created G-code, the continuous fiber reinforcement was 3D printed in grooves created by 3D printing polymer material. Separate printing units/nozzles were used for the polymer material and the continuous fiber reinforcement. The diameter of the fiber filament used was 1.8 mm. The fiber filament was 3D printed into grooves (having a height of 0.6 mm, and a width of 4.2 mm) 3D printed in the part being manufactured. A single fiber layer covered the whole groove (i.e. the height of the groove was equal to the height of a single fiber layer). Additional infill structure was 3D printed by using the polymer nozzle to fill the area surrounded by the fiber layer. The polymer material was 3D printed in 0.3 mm layer thickness. Therefore, the thickness of one fiber layer was equal to the thickness of two polymer layers (see Figure 6A).

### Example 2

The G-code for fiber printing and polymer printing was created using custom made software from a 3D design of the object to be 3D printed. According to the created G-code, the continuous fiber reinforcement was 3D printed in grooves created by 3D printing polymer material using separate printing units/nozzles for the polymer material and the continuous fiber reinforcement. The diameter of the fiber filament used was 1.0 mm. The fiber filament was 3D printed into grooves (having a height of 0.3 mm, and a width of 2.6 mm) 3D printed in the part being manufactured. A single fiber layer covered the whole groove (i.e. the height of the groove was equal to the height of a single fiber layer). Additional infill structure was 3D printed by using the polymer nozzle to fill the area surrounded by the fiber. The polymer material was 3D printed in 0.3 mm layer thickness. Therefore, the thickness of one fiber layer was equal to the thickness of one polymer layer (see Figure 6B).

### Example 3

The G-code for fiber printing and polymer printing was created using custom made software from a 3D design (3D model) of the object to be 3D printed (see Figure 7A, 7B). According to the created G-code, fiber reinforcement, polymer, and support materials were 3D printed. The continuous fiber reinforcement was 3D printed in grooves created by 3D printing polymer material using separate printing units/nozzles for the polymer material, the continuous fiber reinforcement, and the support material. The diameter of the fiber filament used was 1.8 mm. The fiber filament was 3D printed into grooves (having a height of 0.6 mm, and a width of 4.2 mm) 3D printed in the part being manufactured. A single fiber layer covered the whole groove. Additional infill structure was 3D printed by using the polymer nozzle to fill the area surrounded by the fiber. The polymer material was 3D printed in 0.3 mm layer thickness. Therefore, the thickness of one fiber layer was equal to the thickness of two polymer layers (see Figure 6A). Support material was 3D printed on selected areas in accordance with the G-code (see Figure 7A, 7B).

It will be obvious to a person skilled in the art that, as the technology advances, the inventive concept can be implemented in various ways. The invention and its embodiments are not limited to the examples described above but may vary within the scope of the claims.

## Claims

1. A three-dimensional printer (300) for additive manufacturing of a part (700), the three dimensional printer (300) comprising:
a build platen (100) for supporting the part (700) to be manufactured; and
a print head (500) including or connected to a fiber composite filament supply loaded with thermoplastic-pre-impregnated fiber composite filament (800) including one or more inelastic axial fiber strands extending within thermoplastic matrix material of the filament (800);
wherein the print head (500) includes
a first heating zone (1) between the fiber composite filament supply and a heated nozzle (2), which first heating zone (1) is heatable by a first heater above the melting temperature of the thermoplastic matrix material to pre-heat the pre-impregnated fiber composite filament (800);
a consolidation element (9) located after the heated nozzle (2), to apply a consolidation force and/or compaction force to the fiber composite filament (800) to attach the fiber composite filament (800) to the part (700), wherein the consolidation element (9) opposes at least one of the build platen and previously printed structures of the part, the heated nozzle (2) being heatable by a second heater to at least the melting temperature of the matrix material to heat the fiber composite filament (800);
a filament drive (4) to drive the fiber composite filament (800) including the one or more inelastic axial fiber strands, through the first heating zone (1) into the heated nozzle (2), at a selected feed rate;
a cold feed zone (6) between the filament drive (4) and the first heating zone (1), to maintain the temperature of the fiber composite filament (800) below the melting temperature of the matrix material;
a non-heated heat break zone (7) between the first heating zone (1) and the heated nozzle (2) to create a temperature gap between the first heating zone (1) and the heated nozzle (2);
wherein the three dimensional printer (300) comprises a plurality of actuators to move at least the print head (500) including the consolidation element (9) relative to the build platen (100) in three degrees of freedom.

2. The three-dimensional printer according to claim 1, wherein
the print head (500) including the consolidation element (9) is movable around its selected axes;
the print head (500) including the consolidation element (9) is rotatable in selected rotations;
the build platen (100) is movable around its selected axes; and/or
the build platen (100) is rotatable in selected rotations.

3. The three-dimensional printer according to claim 1 or 2, wherein it further comprises a controller (200) operatively connected to the first and second heater, the filament drive (4), the print head (500) including the consolidation element (9), and the plurality of actuators, wherein the controller (200) is configured to execute instructions which cause extrusion of the composite filament (800) to form the part (700).

4. The three-dimensional printer according to claim 1, 2 or 3, wherein it further includes
a polymer drive configured to feed a polymer filament into a polymer extrusion nozzle;
a polymer heater configured to heat the polymer filament to a temperature greater than a melting temperature of the polymer;
wherein the polymer extrusion nozzle is configured to extrude the polymer filament to form the part.

5. The three-dimensional printer according to any of the preceding claims, wherein it further includes
a support material drive configured to feed support material into a support material extrusion nozzle;
a support material heater configured to heat the support material to a temperature that is above a melting temperature of the support material;
wherein the support material extrusion nozzle is configured to extrude the support material filament to form a support structure for the part (700).

6. The three-dimensional printer according to any of the preceding claims, wherein the controller (200) executes instructions which cause additive manufacturing of a layered structure of support material, polymer and the composite filament (800).

7. A method for additive manufacturing of a part, comprising:
supplying a thermoplastic-pre-impregnated fiber composite filament including one or more inelastic axial fiber strands extending within thermoplastic matrix material of the filament;
supporting the part to be manufactured on a build platen;
pre-heating the pre-impregnated fiber composite filament at a first heating zone (1) between the fiber composite filament supply and a heated nozzle (2), wherein the temperature of the first heating zone (1) is set above the melting temperature of the thermoplastic matrix material;
heating the fiber composite filament in the heated nozzle (2), wherein the temperature of the heated nozzle is set above the melting temperature of the matrix material;
applying by a consolidation element (9) attached to the heated nozzle (2), a consolidation force and/or a compaction force to the fiber composite filament (800) to attach the fiber composite filament (800) to the part (700);
moving, by a plurality of actuators, a print head (500) including the consolidation element (9) relative to the build platen in three degrees of freedom;
driving the fiber composite filament including the one or more inelastic axial fiber strands, through the first heating zone (1) into the heated nozzle (2), at a selected feed rate;
maintaining the temperature below the melting temperature of the matrix material at a cold feed zone (6) extending between the filament drive (4) and the first heating zone (1);
interrupting heating of the fiber composite filament (800) at a non-heated heat break zone (7) between first heating zone (1) and the heated nozzle (2) to create a temperature gap between first heating zone (1) and the heated nozzle (2).

8. The method according to claim 7, comprising causing extrusion of the composite filament to form the part.

9. The method according to claim 7 or 8, comprising extruding a polymer filament by a polymer extrusion nozzle to form the part.

10. The method according to claim 7, 8 or 9, comprising extruding support material by a support material extrusion nozzle to form the part.

11. The method according to any of the preceding claims 7 to 10, comprising performing additive manufacturing of a layered structure of support material, polymer and the composite filament.

12. The method according to any of the preceding claims 7 to 11, comprising performing additive manufacturing of a layered structure of support material, polymer and the composite filament, by varying layer thicknesses of support, polymer and composite fiber material layers.

13. The method according to any of the preceding claims 7 to 12, comprising performing additive manufacturing of a freely arranged 3D structure of support material, polymer and the composite filament.

14. The method according to any of the preceding claims 7 to 13, comprising performing additive manufacturing of a freely arranged 3D structure of support material, polymer and the composite filament, wherein the structure has selected area thicknesses of support, polymer and composite fiber materials.

15. The three-dimensional printer according to any of the preceding claims 1 to 6, or the method according to any of the preceding claims 7 to 14, wherein the consolidation element (9) is a consolidation ring (9).

## Patentansprüche

1. Dreidimensionaler Drucker (300) zur additiven Fertigung eines Teils (700), wobei der dreidimensionale Drucker (300) umfasst:
eine Aufbauplatte (100) zum Tragen des zu fertigenden Teils (700); und
einen Druckkopf (500), der eine Faserverbundfilament-Zufuhr enthält oder mit dieser verbunden ist, die mit thermoplastisch vorimprägniertem Faserverbundfilament (800) geladen ist, das einen oder mehrere unelastische axiale Faserstränge enthält, die sich innerhalb des thermoplastischen Matrixmaterials des Filaments (800) erstrecken;
wobei der Druckkopf (500) umfasst:
eine erste Heizzone (1) zwischen der Faserverbundfilament-Zufuhr und einer beheizten Düse (2), wobei die erste Heizzone (1) durch eine erste Heizeinrichtung über die Schmelztemperatur des thermoplastischen Matrixmaterials heizbar ist, um das vorimprägnierte Faserverbundfilament (800) vorzuwärmen;
ein Verfestigungselement (9), das nach der beheizten Düse (2) angeordnet ist und eine Verfestigungskraft und/oder Verdichtungskraft auf das Faserverbundfilament (800) ausübt, um das Faserverbundfilament (800) an dem Teil (700) zu befestigen, wobei das Verfestigungselement (9) mindestens entweder der Aufbauplatte oder zuvor gedruckten Strukturen des Teils gegenüberliegt, wobei die beheizte Düse (2) durch eine zweite Heizeinrichtung auf mindestens die Schmelztemperatur des Matrixmaterials beheizbar ist, um das Faserverbundfilament (800) zu erwärmen;
einen Filamentantrieb (4) zum Vorschieben des Faserverbundfilaments (800), das den einen oder die mehreren unelastischen axialen Faserstränge enthält, mit einer ausgewählten Zuführrate durch die erste Heizzone (1) in die beheizte Düse (2);
eine Kaltzuführzone (6) zwischen dem Filamentantrieb (4) und der ersten Heizzone (1), um die Temperatur des Faserverbundfilaments (800) unter der Schmelztemperatur des Matrixmaterials zu halten;
eine nicht beheizte Wärmeunterbrechungszone (7) zwischen der ersten Heizzone (1) und der beheizten Düse (2), um eine Temperaturdifferenz zwischen der ersten Heizzone (1) und der beheizten Düse (2) zu erzeugen;
wobei der dreidimensionale Drucker (300) eine Vielzahl von Stellantrieben umfasst, um zumindest den Druckkopf (500), der das Verfestigungselement (9) umfasst, relativ zu der Aufbauplatte (100) in drei Freiheitsgraden zu bewegen.

2. Dreidimensionaler Drucker nach Anspruch 1, wobei
der Druckkopf (500) einschließlich des Verfestigungselements (9) um seine ausgewählten Achsen beweglich ist;
der Druckkopf (500) einschließlich des Verfestigungselements (9) in ausgewählten Drehbewegungen drehbar ist;
die Aufbauplatte (100) um ihre ausgewählten Achsen beweglich ist; und/oder
die Aufbauplatte (100) in ausgewählten Drehbewegungen drehbar ist.

3. Dreidimensionaler Drucker nach Anspruch 1 oder 2, wobei er weiter eine Steuereinheit (200) umfasst, die operativ mit der ersten und der zweiten Heizeinrichtung, dem Filamentantrieb (4), dem Druckkopf (500) einschließlich des Verfestigungselements (9) und der Vielzahl von Stellantrieben verbunden ist, wobei die Steuereinheit (200) dafür konfiguriert ist, Befehle auszuführen, die die Extrusion des Verbundfilaments (800) bewirken, um das Teil (700) zu bilden.

4. Dreidimensionaler Drucker nach Anspruch 1, 2 oder 3, wobei er weiter umfasst:
einen Polymerantrieb, der dafür konfiguriert ist, ein Polymerfilament einer Polymerextrusionsdüse zuzuführen;
eine Polymerheizeinrichtung, die dafür konfiguriert ist, das Polymerfilament auf eine Temperatur zu erwärmen, die höher ist als eine Schmelztemperatur des Polymers;
wobei die Polymerextrusionsdüse dafür konfiguriert ist, das Polymerfilament zu extrudieren, um das Teil zu bilden.

5. Dreidimensionaler Drucker nach einem der vorstehenden Ansprüche, wobei er weiter umfasst:
einen Trägermaterialantrieb, der dafür konfiguriert ist, Trägermaterial einer Trägermaterial-Extrusionsdüse zuzuführen;
eine Trägermaterial-Heizeinrichtung, die dafür konfiguriert ist, das Trägermaterial auf eine Temperatur zu erwärmen, die höher ist als eine Schmelztemperatur des Trägermaterials;
wobei die Trägermaterial-Extrusionsdüse dafür konfiguriert ist, das Trägermaterialfilament zu extrudieren, um eine Trägerstruktur für das Teil (700) zu bilden.

6. Dreidimensionaler Drucker nach einem der vorstehenden Ansprüche, wobei die Steuereinheit (200) Befehle ausführt, die eine additive Fertigung einer Schichtstruktur aus Trägermaterial, Polymer und dem Verbundfilament (800) bewirken.

7. Verfahren zur additiven Fertigung eines Teils, umfassend:
Zuführen eines thermoplastisch vorimprägnierten Faserverbundfilaments, das einen oder mehrere unelastische axiale Faserstränge enthält, die sich innerhalb des thermoplastischen Matrixmaterials des Filaments erstrecken;
Tragen des zu fertigenden Teils auf einer Aufbauplatte;
Vorwärmen des vorimprägnierten Faserverbundfilaments in einer ersten Heizzone (1) zwischen der Faserverbundfilament-Zufuhr und einer beheizten Düse (2), wobei die Temperatur der ersten Heizzone (1) oberhalb der Schmelztemperatur des thermoplastischen Matrixmaterials eingestellt wird;
Erwärmen des Faserverbundfilaments in der beheizten Düse (2), wobei die Temperatur der beheizten Düse oberhalb der Schmelztemperatur des Matrixmaterials eingestellt wird;
Aufbringen einer Verfestigungskraft und/oder einer Verdichtungskraft auf das Faserverbundfilament (800) durch ein an der beheizten Düse (2) befestigtes Verfestigungselement (9), um das Faserverbundfilament (800) an dem Teil (700) zu befestigen;
Bewegen, durch eine Vielzahl von Stellantrieben, eines Druckkopfes (500), der das Verfestigungselement (9) umfasst, relativ zu der Aufbauplatte in drei Freiheitsgraden;
Vorschieben des Faserverbundfilaments, das den einen oder die mehreren unelastischen axialen Faserstränge enthält, mit einer ausgewählten Zuführrate durch die erste Heizzone (1) in die beheizte Düse (2);
Halten der Temperatur unter der Schmelztemperatur des Matrixmaterials in einer Kaltzuführzone (6), die sich zwischen dem Filamentantrieb (4) und der ersten Heizzone (1) erstreckt;
Unterbrechen des Erwärmens des Faserverbundfilaments (800) in einer nicht beheizten Wärmeunterbrechungszone (7) zwischen der ersten Heizzone (1) und der beheizten Düse (2), um eine Temperaturdifferenz zwischen der ersten Heizzone (1) und der beheizten Düse (2) zu erzeugen.

8. Verfahren nach Anspruch 7, umfassend das Bewirken der Extrusion des Verbundfilaments, um das Teil zu bilden.

9. Verfahren nach Anspruch 7 oder 8, umfassend das Extrudieren eines Polymerfilaments durch eine Polymerextrusionsdüse, um das Teil zu bilden.

10. Verfahren nach Anspruch 7, 8 oder 9, umfassend das Extrudieren des Trägermaterial durch eine Trägermaterial-Extrusionsdüse, um das Teil zu bilden.

11. Verfahren nach einem der vorstehenden Ansprüche 7 bis 10, umfassend das Durchführen der additiven Fertigung einer Schichtstruktur aus Trägermaterial, Polymer und dem Verbundfilament.

12. Verfahren nach einem der vorstehenden Ansprüche 7 bis 11, umfassend das Durchführen der additiven Fertigung einer Schichtstruktur aus Trägermaterial, Polymer und dem Verbundfilament durch Variieren der Schichtdicken von Träger-, Polymer- und Verbundfaser-Materialschichten.

13. Verfahren nach einem der vorstehenden Ansprüche 7 bis 12, umfassend das Durchführen der additiven Fertigung einer frei angeordneten 3D-Struktur aus Trägermaterial, Polymer und dem Verbundfilament.

14. Verfahren nach einem der vorstehenden Ansprüche 7 bis 13, umfassend das Durchführen der additiven Fertigung einer frei angeordneten 3D-Struktur aus Trägermaterial, Polymer und dem Verbundfilament, wobei die Struktur ausgewählte Flächendicken von Träger-, Polymer- und Verbundfasermaterial aufweist.

15. Dreidimensionaler Drucker nach einem der vorstehenden Ansprüche 1 bis 6 oder Verfahren nach einem der vorstehenden Ansprüche 7 bis 14, wobei das Verfestigungselement (9) ein Verfestigungsring (9) ist.

## Revendications

1. Imprimante tridimensionnelle (300) pour fabrication additive d'une pièce (700), l'imprimante tridimensionnelle (300) comprenant :
une platine de construction (100) pour supporter la pièce (700) devant être fabriquée ; et
une tête d'impression (500) comprenant ou connectée à une alimentation en filament composite de fibres, chargée de filament composite de fibres préimprégné thermoplastique (800) comprenant un ou plusieurs brins de fibres axiaux non élastiques s'étendant à l'intérieur du matériau de matrice thermoplastique du filament (800) ;
dans laquelle la tête d'impression (500) comprend
une première zone de chauffage (1) entre l'alimentation en filament composite de fibres et une buse chauffée (2), laquelle première zone de chauffage (1) peut être chauffée par un premier élément chauffant au-delà du point de fusion du matériau de matrice thermoplastique pour préchauffer le filament composite de fibres préimprégné (800) ;
un élément de consolidation (9) situé après la buse chauffée (2), pour appliquer une force de consolidation et/ou une force de compactage au filament composite de fibres (800) pour attacher le filament composite de fibres (800) à la pièce (700), lequel élément de consolidation (9) est opposé à au moins l'une parmi la platine de construction et des structures antérieurement imprimées de la pièce, la buse chauffée (2) pouvant être chauffée par un deuxième élément chauffant au moins jusqu'au point de fusion du matériau de matrice pour chauffer le filament composite de fibres (800) ;
un entraînement de filament (4) pour entraîner le filament composite de fibres (800) comprenant le ou les brins de fibres axiaux non élastiques à travers la première zone de chauffage (1) dans la buse chauffée (2), à une vitesse d'alimentation sélectionnée ;
une zone d'alimentation froide (6) entre l'entraînement de filament (4) et la première zone de chauffage (1), pour maintenir la température du filament composite de fibres (800) inférieure au point de fusion du matériau de matrice ;
une zone de rupture thermique non chauffée (7) entre la première zone de chauffage (1) et la buse chauffée (2) pour créer un intervalle de température entre la première zone de chauffage (1) et la buse chauffée (2) ;
laquelle imprimante tridimensionnelle (300) comprend une pluralité d'actionneurs pour déplacer au moins la tête d'impression (500) comprenant l'élément de consolidation (9) par rapport à la platine de construction (100) selon trois degrés de liberté.

2. Imprimante tridimensionnelle selon la revendication 1, dans laquelle
la tête d'impression (500) comprenant l'élément de consolidation (9) est mobile autour de ses axes sélectionnés ;
la tête d'impression (500) comprenant l'élément de consolidation (9) peut tourner selon des rotations sélectionnées ;
la platine de construction (100) est mobile autour de ses axes sélectionnés ; et/ou
la platine de construction (100) peut tourner selon des rotations sélectionnées.

3. Imprimante tridimensionnelle selon la revendication 1 ou 2, qui comprend en outre un contrôleur (200) connecté de manière fonctionnelle aux premier et deuxième éléments chauffants, à l'entraînement de filament (4), à la tête d'impression (500) comprenant l'élément de consolidation (9), et à la pluralité d'actionneurs, dans laquelle le contrôleur (200) est configuré pour exécuter des instructions qui provoquent l'extrusion du filament composite (800) pour former la pièce (700).

4. Imprimante tridimensionnelle selon la revendication 1, 2 ou 3, qui comprend en outre
un entraînement de polymère configuré pour introduire un filament polymère dans une buse d'extrusion de polymère ;
un élément chauffant de polymère configuré pour chauffer le filament polymère à une température supérieure au point de fusion du polymère ;
dans laquelle la buse d'extrusion de polymère est configurée pour extruder le filament polymère pour former la pièce.

5. Imprimante tridimensionnelle selon l'une quelconque des revendications précédentes, qui comprend en outre
un entraînement de matériau de support configuré pour introduire du matériau de support dans une buse d'extrusion de matériau de support ;
un élément chauffant de matériau de support configuré pour chauffer le matériau de support à une température supérieure au point de fusion du matériau de support ;
dans laquelle la buse d'extrusion de matériau de support est configurée pour extruder le filament de matériau de support pour former une structure de support pour la pièce (700) .

6. Imprimante tridimensionnelle selon l'une quelconque des revendications précédentes, dans laquelle le contrôleur (200) exécute des instructions qui provoquent la fabrication additive d'une structure stratifiée de matériau de support, de polymère, et du filament composite (800).

7. Procédé de fabrication additive d'une pièce, comprenant :
la fourniture d'un filament composite de fibres préimprégné thermoplastique comprenant un ou plusieurs brins de fibres axiaux non élastiques s'étendant à l'intérieur du matériau de matrice thermoplastique du filament ;
le support de la pièce devant être fabriquée sur une platine de construction ;
le préchauffage du filament composite de fibres préimprégné au niveau d'une première zone de chauffage (1) entre l'alimentation en filament composite de fibres et une buse chauffée (2), dans lequel la température de la première zone de chauffage (1) est réglée supérieure au point de fusion du matériau de matrice thermoplastique ;
le chauffage du filament composite de fibres dans la buse chauffée (2), dans lequel la température de la buse chauffée est réglée supérieure au point de fusion du matériau de matrice ;
l'application, par un élément de consolidation (9) attaché à la buse chauffée (2), d'une force de consolidation et/ou d'une force de compactage au filament composite de fibres (800) pour attacher le filament composite de fibres (800) à la pièce (700) ;
le déplacement, par une pluralité d'actionneurs, d'une tête d'impression (500) comprenant l'élément de consolidation (9) par rapport à la platine de construction selon trois degrés de liberté ;
l'entraînement du filament composite de fibres, comprenant le ou les brins de fibres axiaux non élastiques, à travers la première zone de chauffage (1) dans la buse chauffée (2), à une vitesse d'alimentation sélectionnée ;
le maintien de la température inférieure au point de fusion du matériau de matrice au niveau d'une zone d'alimentation froide (6) s'étendant entre l'entraînement de filament (4) et la première zone de chauffage (1) ;
l'interruption du chauffage du filament composite de fibres (800) au niveau d'une zone de rupture thermique non chauffée (7) entre la première zone de chauffage (1) et la buse chauffée (2) pour créer un intervalle de température entre la première zone de chauffage (1) et la buse chauffée (2).

8. Procédé selon la revendication 7, comprenant la réalisation d'une extrusion du filament composite pour former la pièce.

9. Procédé selon la revendication 7 ou 8, comprenant l'extrusion d'un filament polymère par une buse d'extrusion de polymère pour former la pièce.

10. Procédé selon la revendication 7, 8 ou 9, comprenant l'extrusion de matériau de support par une buse d'extrusion de matériau de support pour former la pièce.

11. Procédé selon l'une quelconque des revendications 7 à 10, comprenant la mise en œuvre d'une fabrication additive d'une structure stratifiée de matériau de support, de polymère, et du filament composite.

12. Procédé selon l'une quelconque des revendications 7 à 11, comprenant la mise en œuvre d'une fabrication additive d'une structure stratifiée de matériau de support, de polymère, et du filament composite, par variation des épaisseurs de couche des couches de support, de polymère, et de matériau fibreux composite.

13. Procédé selon l'une quelconque des revendications 7 à 12, comprenant la mise en œuvre d'une fabrication additive d'une structure 3D librement agencée de matériau de support, de polymère, et du filament composite.

14. Procédé selon l'une quelconque des revendications 7 à 13, comprenant la mise en œuvre d'une fabrication additive d'une structure 3D librement agencée de matériau de support, de polymère, et du filament composite, dans lequel la structure a des épaisseurs de zone sélectionnées de support, de polymère, et de matériau fibreux composite.

15. Imprimante tridimensionnelle selon l'une quelconque des revendications 1 à 6, ou procédé selon l'une quelconque des revendications 7 à 14, dans lequel l'élément de consolidation (9) est une bague de consolidation (9).
